# EUROPÄISCHE PATENTSCHRIFT

(11) **EP 0 714 826 B1**
(45) Veröffentlichungstag und Bekanntmachung des Hinweises auf die Patenterteilung: **04.11.1998**
(21) Anmeldenummer: 95113972.4
(22) Anmeldetag: 06.09.1995
(51) Int. Cl.: B62M 25/04, B62K 23/04

(54) **Rastenschalter für ein Fahrradgetriebe**
Indexing device for a bicycle transmission
Dispositif d'indexation pour transmission de bicyclette

(30) Priorität: 02.12.1994 DE 4442953
(43) Veröffentlichungstag der Anmeldung: 05.06.1996
(73) Patentinhaber: SRAM Deutschland GmbH, 97424 Schweinfurt (DE)
(72) Erfinder: Arbeiter, Markus, Dipl.-Ing., D-97072 Würzburg (DE)

(56) Entgegenhaltungen:
- FR-A- 2 540 818
- US-A- 5 197 927

## Beschreibung

Die Erfindung betrifft einen Rastenschalter für die Betätigung von Fahrradgetrieben, wie Naben oder Kettenschaltungen, gemäß dem Oberbegriff des Anspruchs 1.

Mit der FR 25 40 818 ist ein Rastenschalter bekannt geworden, der gemäß Fig. 7 eine unter Vorspannung stehende Rastfeder mit einer Rastnase aufweist, die in ein Profil des Rastelements unter Vorspannung eingreift. Diese Vorspannung ist konstant und abhängig von dem Niveau der Aussparung im Gehäuse dieses Schalters, in welchem die Rastfeder zur Erzeugung der Vorspannung mit zwei bügelartig ausgestalteten Enden ruht. Die Anordnung dient ebenso wie eine gemäß den Fig. 6 oder 9 der Geräuscherzeugung, wobei man hier überall mit konstanter Vorspannung arbeitet.

Der vorliegende Erfindungsgegenstand hat demgegenüber den Vorteil, speziell bei Drehgriffschaltungen die Verrasterung der Rastfeder mit dem Rastelement durch Erhöhung oder Verringerung der Vorspannung zu verstärken oder zu schwächen, was es dem Benutzer individuell gestattet, die Schaltkraft seinen eigenen Wünschen hinsichtlich des Verhältnisses zwischen seiner Schaltkraft und der Haltekraft der Verrasterung zu wählen. Ungewollte Schaltvorgänge werden vermieden, wenn der Fahrer die Haltekraft der Verrasterung des Rastenschalters so einstellen kann, daß sich beim Treten die Handbetätigung am Rastenschalter gerade nicht mehr verdreht.

Es ist daher die Aufgabe der Erfindung, einen Schalter für Fahrradgetriebe zu schaffen, dessen Verrasterung in Bezug auf ihre Haltekraft durch Veränderung der Vorspannung der miteinander zu verrastenden Teile individuell einstellbar ist.

Die Lösung der Aufgabe ist in den Ansprüchen beschrieben.

Anhand von Zeichnungen wird ein Ausführungsbeispiel einer Einrichtung zur Veränderung der Vorspannung zwischen den zu verrastenden Teilen im Rastenschalter beschrieben. Es zeigen:
- Fig. 1: einen Ausschnitt eines Rastenschalters mit einem Gehäuse, einem Rastelement, einer Rastfeder und einem Schieber mit mehreren Vorspannstufen;
- Fig. 2: eine perspektivische Darstellung des Ausschnittes gemäß Fig. 1 mit einer näheren Veranschaulichung des Schiebers;
- Fig. 3: eine Variante des Schiebers mit stufenloser Verstellmöglichkeit der Vorspannung der Rastfeder.

Wird mit 1 ein Rastenschalter, insbesondere ein Drehgriffschalter zur Betätigung von Fahrradgetrieben, wie Naben oder Kettenschaltungen, bezeichnet, so umfaßt dieser ein Gehäuse 11, ein Rastelement 13 mit Rasten 15, eine Rastfeder 3 mit einer Rastnase 5 und zwei Vorsprüngen 23 sowie einen Schieber mit verschiedenen Vorspannstufen 9a,9b,9c..., die mit den Vorsprüngen 23 der Rastfeder 3 zusammenarbeiten. Das Gehäuse 11 ist vorzugsweise mit dem Lenker des Fahrrades im Bereich des Griffteils drehfest verbunden und weist auf der Kreisbahn der Rastfeder 3 eine Aussparung auf, die von den Anschlagflächen 21 und 21a gebildet wird. In dieser Aussparung liegt die Rastfeder 3, welche an der einen Anschlagfläche 21 durch die von dem Fahrradgetriebe erzeugte Federkraft anliegt und zwischen sich und der anderen Anschlagfläche 21a ein Spiel aufweist, welches einen Überschaltweg 25 darstellen kann, wodurch die Position der Rastfeder 3 in ihrer Ruhelage definiert ist. Die vorgenannte Aussparung im Gehäuse 11 wird von dem Rastelement 13, das mit dem drehbaren Teil des Drehgriffschalters verbunden ist, mit mehreren der Rastnase 5 zugewandten Rasten 15 überfahren, wodurch eine Verrasterung dann entsteht, wenn die Rastnase 5 in die Rasten 15 unter Vorspannung hineingepreßt wird. Diese Vorspannung wird durch die Rastfeder 3 erzeugt, die mit zwei Vorsprüngen 23 auf dem Schieber 9 ruht, der verschiedene Vorspannstufen 9a,9b,9c... aufweist, die hinsichtlich der Vorsprünge 23 auf verschiedenem Niveau liegen und durch Änderung der Lage des Schiebers 9 paarweise nacheinander unter die Vorsprünge 23 geschoben werden können.

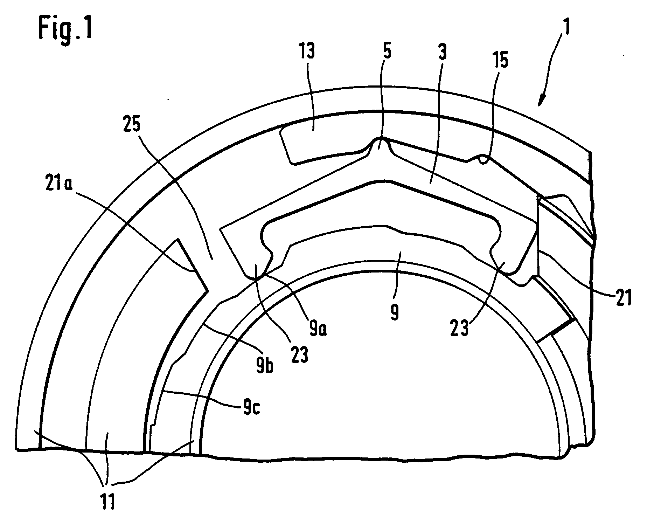

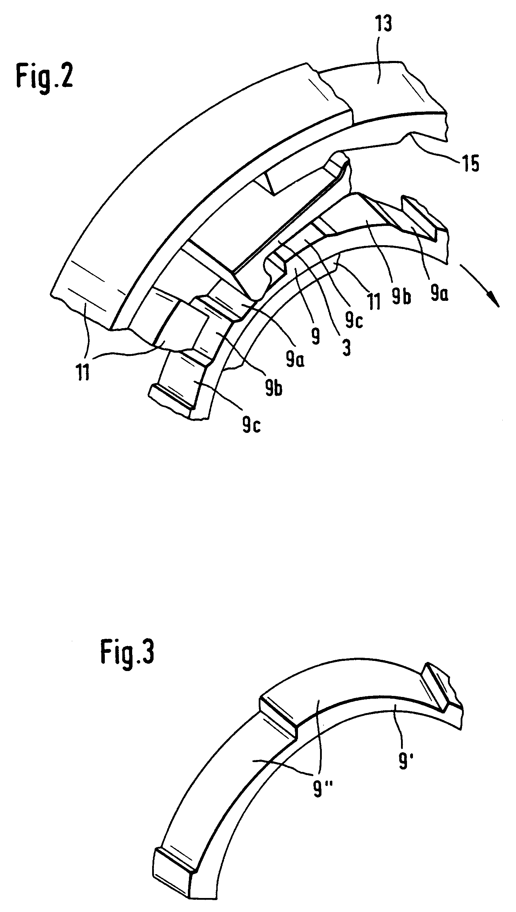

In der gemäß den Fig. 1 und 2 dargestellten Position stehen die Vorsprünge 23 der Rastfeder 3 jeweils auf den Vorspannstufen 9a des Schiebers 9. In dieser Position ist die Rastfeder am wenigsten stark vorgespannt mit der Auswirkung, daß das Rastelement 13 am leichtesten aus der Halteposition der Verrasterung herausgeschoben bzw. - gezogen - werden kann. Wird der Schieber 9 im Uhrzeigersinn gemäß den Fig. 1 und 2 verdreht, so werden die Vorsprünge 23 auf das höhere Niveau der nun folgenden Vorspannstufen 9b gebracht, wodurch die Rastfeder 3 um den Niveauunterschied zwischen den Vorspannstufen 9a und 9b stärker vorgespannt wird mit der Folge, daß die Verrasterung einen höheren Widerstand gegen eine Verdrehkraft entwickelt. Entsprechend verhält sich die Haltekraft der Verrasterung bei der abermaligen Verschiebung der Vorspannstufen 9c unter die Vorsprünge 23 der Rastfeder 3.

Die Vorspannstufen 9a,9b,9c... sind in der Umfangserstreckung so groß gewählt, daß sich die Rastfeder 3 um die Umfangserstreckung des Überschaltweges 25 verschieben läßt, ohne daß die Vorsprünge 23 die jeweilige Vorspannstufe 9a oder 9b oder 9c... verlassen.

Gemäß Fig. 3 ist ein Schieber 9' gezeigt, dessen Berührungsflächen 9'' mit den Vorsprüngen 23 der Rastfeder 3 nicht mehr aus verschiedenen Vorspannstufen, sondern jeweils aus einer schiefen Ebene mit geringem Neigungswinkel bestehen, was den besonderen Vorteil einer stufenlosen Verstellmöglichkeit der Vorspannung zwischen der Rastfeder 3 und dem Rastelement 13 ermöglicht.

Allgemein ist zur Wirkungsweise des Rastenschalters zu sagen, daß die Schaltbewegungen ausschließlich über das Rastelement 13 ablaufen, da es einerseits mit dem vom Fahrer betätigten Drehgriff direkt verbunden ist und auf der anderen Seite mit dem einen Ende eines Steuerdrahtes eines Bowdenzuges verbunden ist, dessen anderes Ende am Verstellmechanismus der Kettenschaltung angeordnet ist. Die Schaltung erfolgt also direkt vom Drehgriff auf die Kettenschaltung, wobei der hier beschriebene Mechanismus lediglich den Schaltwiderstand verändert, und zwar im Rhythmus der geschalteten Gänge mit der Möglichkeit, in jedem Gang einen Stillstand herbeizuführen, nämlich nach Einrasten der Rastnase 5 in eine der Rasten 15 mit wahlweise der erfindungsgemäßen Vorspannung.

## Patentansprüche

1. Rastenschalter (1) für ein Fahrradgetriebe, umfassend ein Gehäuse (11), ein Rastelement (13) mit Rasten (15), eine Rastfeder (3) mit mindestens einer Rastnase (5), zwei der Rastnase (5) in Richtung des Kraftverlaufs gesehen gegenüberliegende Vorsprünge (23), sowie eine Aussparung für die Rastfeder (3) mit Anschlagflächen (21 und 21a) am Gehäuse (11), dadurch gekennzeichnet, daß die Rastfeder (3) mit einem Schieber (9) zum Zwecke der Erzeugung einer Vorspannung der Rastnase (5) in den Rasten (15) des Rastelementes (13) zusammenwirkt, wobei jeder der beiden Vorsprünge (23) durch Verändern der Lage des Schiebers (9) wahlweise von je einer ersten Vorspannfläche (9a) mit einem ersten Niveau, oder einer zweiten Vorspannfläche (9b) mit einem zweiten Niveau oder einer dritten Vorspannfläche (9c) mit einem dritten Niveau... verschieden stark vorspannbar ist.

2. Rastenschalter nach Anspruch 1, dadurch gekennzeichnet, daß die Vorspannflächen (9a,9b,9c...) in ihrer Breite derart ausgelegt sind, daß eine Verschiebung der Rastenfeder (3) in der Größenordnung eines von der Rastfeder (3) und Anschlagfläche (21a) vorgegebenen Überschaltweg (25) ohne Niveauänderung möglich ist.

3. Rastenschalter nach Anspruch 1, dadurch gekennzeichnet, daß der Schieber (9') das Niveau der Vorsprünge (23) durch je eine den Vorspannflächen (9a,9b,9c...), entsprechende schiefe Ebene (27) stufenlos veränderbar gestaltet.

## Claims

1. Indexing gear control (1) for a bicycle gear comprising a housing (11), a detent element (13) with teeth (15), a detent spring (3) with at least one detent nose (5), two projections (23) lying opposite the nose (5) in the direction of the path of the force, as well as a recess for the detent spring (3) with stop faces (21 and 21a) on the housing (11), characterised in that the detent spring (3) co-operates with a slide (9) with the aim of generating a pre-load of the nose (5) in the teeth (15) of the detent element (13), each of the two projections (23) being capable of being pre-loaded to a different degree of strength by altering the position of the slide (9) at will from a first pre-loading surface (9a) having a first level, or a second pre-loading surface (9b) having a second level or a third pre-loading surface (9c) having a third level...

2. Indexing gear control according to claim 1, characterised in that the pre-loading surfaces (9a, 9b, 9c...) are of such extent that displacement of the detent spring (3) in the order of magnitude of an over-travel (25) set by the detent spring (3) and stop face (21a) is possible without an alteration in level.

3. Indexing gear control according to claim 1, characterised in that the slide (9') is able to vary the level of the projections (23) in a stepless manner by the provision of a smooth plane (27) corresponding to the pre-loading surfaces (9a, 9b, 9c...).

## Revendications

1. Commutateur à encliquetage (1) pour un changement de vitesse de bicyclette, comprenant un boîtier (11), un élément d'encliquetage (13) avec des crans (15) , un ressort d'encliquetage (3) avec au moins un nez d'encliquetage (5), deux cliquets (23) opposés au nez d'encliquetage (15) quand on regarde dans le sans d'évolution de la force, ainsi qu'un évidement pour le ressort d'encliquetage (3) avec des faces de butée (21 et 21a) sur le boîtier (11),
caractérisé en ce que
le ressort d'encliquetage (3) coopère avec un coulisseau (9) pour produire une prétension du nez d'encliquetage (5) dans les crans (15) de l'élément d'encliquetage (13), où on peut contraindre à une force différente chacun des deux cliquets (23) en modifiant à volonté par la position du coulisseau (9) par une première surface de prétension (9a) à un premier niveau, ou par une deuxième surface de prétension (9b) à un deuxième niveau ou par une troisième surface de prétension (9c) à un troisième niveau.

2. Commutateur à encliquetage selon la revendication 1,
caractérisé en ce qu'
on établit les surfaces de prétension (9a, 9b, 9c...) en leurs largeurs de façon à ce qu'un déplacement du ressort d'encliquetage (3) est possible dans l'ordre de grandeur d'une course de commutation (25) établie par le ressort d'encliquetage (3) et la face de butée (21a) sans changement de niveau.

3. Commutateur à encliquetage selon la revendication 1,
caractérisé en ce que
le coulisseau (9') établit le niveau des cliquets (23) grâce à un plan incliné (27) correspondant aux surfaces de prétension (9a, 9b, 9c ...) de manière continue.
